# EUROPÄISCHE PATENTSCHRIFT

(11) **EP 0 523 341 B1**
(45) Veröffentlichungstag und Bekanntmachung des Hinweises auf die Patenterteilung: **27.12.1995**
(21) Anmeldenummer: 92108327.5
(22) Anmeldetag: 18.05.1992
(51) Int. Cl.: F16L 11/16, F16L 27/10

(54) **Agraffschlauch mit Kreisquerschnitt für Abgasleitungen von Brennkraftmaschinen**
Hose with interlocking parts having circular cross-section for exhaust gas pipes of motor vehicles
Tuyau souple agrafé avec section circulaire pour conduits d'échappement de véhicules automobiles

(30) Priorität: 28.06.1991 DE 4121350
(43) Veröffentlichungstag der Anmeldung: 20.01.1993
(73) Patentinhaber: Witzenmann GmbH Metallschlauch-Fabrik Pforzheim, D-75175 Pforzheim (DE)
(72) Erfinder: Dörge, Franz, W-7538 Keltern-Weiler (DE)
(74) Vertreter: Lemcke, Rupert, Dipl.-Ing.

(56) Entgegenhaltungen:
- DE-C- 238 621
- FR-A- 2 219 366
- US-A- 3 682 203

## Beschreibung

Die Erfindung betrifft einen Agraffschlauch mit Kreisquerschnitt für Abgasleitungen von Brennkraftmaschinen, der durch schraubengangförmiges Wickeln aus einem vorprofilierten Metallband und Verfalzen benachbarter Bandkanten unter Ausbildung mehrerer Falzlagen gebildet ist, wobei der Schlauch für jeden Wickelumfang im Bereich der Falzlagen wenigstens eine Einprägung aufweist.

Bei derartigen Agraffschläuchen geschieht die Verfalzung benachbarter Kanten dadurch, daß das Band im wesentlichen S-förmig profiliert wird, wobei in der Mitte des Profils ein Steg entsteht, der später im wesentlichen radial zum Schlauch liegt, und wobei die S-Haken benachbarter Bandkanten in hintergreifenden Eingriff gebracht werden, so daß der Bereich der Falzlagen in Radialrichtung des Schlauches gesehen aus vier Lagen des Bandmaterials besteht.

Bei der Herstellung von runden Agraffschläuchen bzw. Agraffschläuchen mit Kreisquerschnitt müssen diese zum Erhalt der erforderlichen Dichtheit und Formstabilität in der Regel sehr fest gewickelt werden. Dies führt jedoch dazu, daß der Schlauch eine hohe Verstellkraft bezüglich der axialen, lateralen und angularen Beweglichkeit aufweist, wobei er jedoch andererseits bestimmungsgemäß als bewegliches Leitungselement zum Ausgleich derartiger Stellkräfte eingesetzt wird.

Dabei liegt der Vorteil der Agraffschläuche mit Kreisquerschnitt zusätzlich darin, daß sie für die Montage mit Anschlußarmaturen besonders geeignet sind, die Verbindung dort wird dichter als bei kantigen Schläuchen.

Beim Wickeln und beim Transport vor dem Einbau führen jedoch die Vibrationsbelastungen und die Spannungen innerhalb der einzelnen Schlauchwicklungen dazu, daß sich die Bandwicklungen entgegen der Wicklungsrichtung aufdrehen. Hierdurch findet eine Veränderung der Schlaucheigenschaften statt, wobei besonders in der Nähe der Enden Querschnittsänderungen mit Festigkeitsverringerung sowie größere Undichtigkeit eintreten.

Um dem Aufdrehen des Schlauches entgegenzutreten, ist es durch die DE-PS 35 46 049 bekannt, einen Agraffschlauch mit vieleckigem Querschnitt so zu wickeln, daß alle Lagen des Falzbereiches zwischen benachbarten Schlauchecken konzentrische und gleichmäßig eng aneinanderliegende Bögen darstellen, die eine zur Schlauchaußenseite hin gerichtete Wölbung aufweisen. Hierdurch wird die Undichtigkeit gegenüber einem üblichen mehrkantig gewickelten Schlauch verringert. Gleichzeitig geht jedoch mit dieser Fertigungsart eine Erhöhung der bei der Herstellung erforderlichen Verformungskräfte einher. Schließlich ergibt sich ein nicht mehr kreisförmiger Anschlußquerschnitt, so daß zwar die geschilderten Probleme innerhalb des Agraffschlauches hinsichtlich Dichtigkeit und Torsionsfestigkeit bewältig sind, andererseits jedoch gesteigerte Aufwendungen bei der Herstellung in Kauf genommen werden müssen sowie Probleme bei der Kombination mit Anschlußteilen, die in der Regel Kreisquerschnitte aufweisen.

Durch die US-A 3 682 203 ist ein Agraffschlauch der Eingangs genannten Art bekannt, wobei jedoch jeweils nur die beiden äußeren Falzlagen mit einer ineinandergreifenden Profilierung versehen sind, um das Aufspringen des Schlauches zu verhindern. Die Profilierung ist über den gesamten Schlauchumfang lückenlos fortgesetzt und ist in den beiden äußeren Falzlagen jeweils gleich tief, während die beiden inneren Lagen der Falze keine Profilierung aufweisen. Dies führt dazu, daß die Profilierung vor dem Wickeln des Schlauches im Band angebracht werden muß, wozu es zusätzlicher Prägewalzen für das in die Wickelvorrichtung einlaufende Band bedarf, die erhebliche Kosten verursachen und damit die Herstellung des Schlauches verteuern. Darüber hinaus wird der Schlauch auf jeden Fall undicht, denn im Bereich der aneinanderliegenden Profilierungen der beiden Außenlagen jedes Falzes ist eine Dichtfunktion nur noch in herabgesetztem Maße.

Aufgabe der Erfindung ist es daher, ausgehend von einem Agraffschlauch der eingangs genannten Art soweit wie möglich und damit also praktisch bei dem Kreisquerschitt zu bleiben und andererseits jedoch die Gefahr eines wärme- und vibrationsbedingten, also betriebsbedingten Aufdrehens des Schlauches und damit einer sich einstellenden Undichtigkeit und Querschnittsänderung zu begegnen.

Dabei liegt der Erfindung die Erkenntnis zugrunde, daß es für die Dichtigkeit des Schlauches ganz wesentlich darauf ankommt, daß innerhalb der einzelnen in Eingriff stehenden Agraffen eine über den Umfang des Schlauches sich erstreckende gleichmäßig dichte Packung innerhalb der Falzlage aufrechterhalten bleibt, die sich jedoch nur bei Agraffschläuchen mit Kreisquerschnitt in gleichmäßig über den Umfang verteilter Weise darstellen läßt.

Die genannte Aufgabe ist erfindungsgemäß dadurch gelöst, daß die Einprägung von radial innen nach radial außen aufgebracht und eingedrückt ist, und daß die Stärke der Einprägung im wesentlichen den Radialbereich zwischen innerer und äußerer Falzlage unter Aufzehrung des Spiels zwischen radial benachbarten Falzlagen überbrückend ausgebildet ist.

Diese erfindungsgemäßen Maßnahmen haben die Wirkung, daß die einzelnen Windungen der Schlauchwicklung unbeeinträchtigt zu einem Agraffschlauch mit kreisförmigen Querschnitt zusammengefügt sein können unter gleichmäßig dichter Packung im Bereich der Falzlage so, daß sich eine über den Schlauchumfang erstreckende, dichtende Linienberührung benachbarter Falzlagen ergibt. Dadurch, daß die Einprägung von radial innen nach radial außen angebracht ist, wird die Relativbewegung der einzelnen den Agraffschlauch bildenden Bandlagen eingeschränkt, führt also zu einem Abbau des Rückspringverhaltens der einzelnen ineinandergewickelten Bandlagen.

Andererseits führt die Vorsehung der erfindungsgemäßen Einprägungen zu einem verhältnismäßig scharfkantigen Prägebild, von dem ausgehend sich in Umfangsrichtung nur verhältnismäßig geringfügige Übergangsflächen ergeben, so daß neben den Einprägungen der Schlauchquerschnitt schnell wieder in den Kreisquerschnitt übergeht.

Es kann also mit dem erfindungsgemäßen Schlauch bei der einfachen, gleichmäßigen und leicht beherrschbaren Wickeltechnik für Agraffschläuche mit Kreisquerschnitt geblieben werden, wobei jeweils nur kurze "Stolperstellen" für die Anbringung der Einprägung zu überwinden sind, die jedoch weder den Querschnitt des Schlauches nenneswert beeinflussen noch den Wickelvorgang in einer ins Gewicht fallenden Weise stören könnten. Trotzdem ist andererseits durch die Anbringung der Einprägungen sichergestellt, daß sich die einzelnen Windungen des Schlauchwickels nicht in Umfangsrichtung gegeneinander verschieben und damit unter der Rückfederungsspannung nach dem Wickelvorgang aufdrehen können, so daß die bei dem Wickelvorgang erreichte Dichtigkeit benachbarter Bandwindungen auch nach betriebsbedingten Beeinträchtigungen voll aufrechterhalten bleibt.

Dadurch, daß die Einprägung sich nur über den Radialbereich erstreckt, den die Falzlagen unter Einschluß des zwischen ihnen bestehenden Spiels einnehmen, ergibt sich eine geringe Prägetiefe mit entsprechend geringer Werkzeugbeanspruchung und Beeinflussung der Wickelkraft. Andererseits bleibt das äußere Aussehen des erfindungsgemäßen Agraffschlauches gegenüber einem rein kreisförmig gewickelten Agraffschlauch unverändert. Das gilt auch dann, wenn die Einprägung den genannten Radialbereich der Falzlagen geringfügig überschreitet.

Zur Herstellung des erfindungsgemäßen Agraffschlauches kann ein sehr einfaches Werkzeug verwendet werden. Hier ist es ausreichend, wenn bei einem an sich bekannten Wickeldorn mit Kreisquerschnitt eine im wesentlichen zum Schlauch achsparallele Leiste auf dem Mantel des Wickeldorns angebracht wird, deren äußere Querschnittskonfiguration in Umfangsrichtung gesehen der gewünschten Einprägung entspricht.

Für den Gegenstand der Erfindung als ausreichend hat es sich erwiesen, über jeden Wickelumfang einer Schlauchwindung eine der erfindungsgemäßen Einprägungen anzubringen. Zweckmäßig kann es jedoch sein, daß gleichmäßig über den Schlauchumfang verteilt zwei Einprägungen angeordnet werden, wobei die Zahl solcher Einprägungen höchstens vier sein sollte. Dies hängt vor allem davon ab, welcher Schlauchdurchmesser jeweils hergestellt wird. Hier ist für einen kleinen Schlauchquerschnitt sicherlich die Anbringung einer Einprägung ausreichend, während für einen großen Schlauchquerschnitt von zwei bis vier Einprägungen durchaus vorteilhaft sein können.

Weitere Merkmale und Einzelheiten der Erfindung ergeben sich aus der nachfolgenden Beschreibung einer Ausführungsform, die auf der Zeichnung dargestellt ist. In der Zeichnung zeigen:
- Fig. 1: einen axialen Abschnitt eines Agraffschlauches mit kreisförmigem Wicklungsquerschnitt, teilweise aufgeschnitten;
- Fig. 2: eine teilweise Schnittansicht II-II aus Fig. 1 und
- Fig. 3: ein Stück des Bandprofils aus dem fertigen Schlauch gemäß Fig. 1.

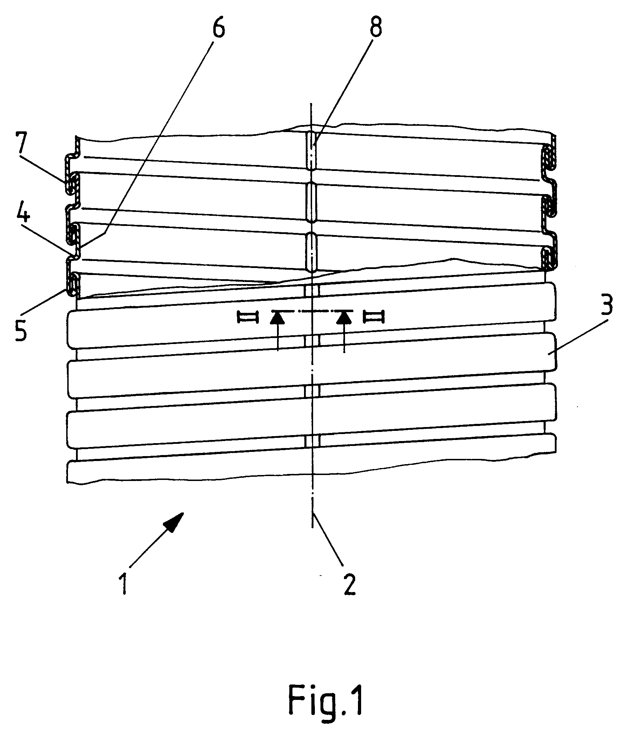

Wie aus Fig. 1 ersichtlich, besteht ein insgesamt mit 1 bezeichneter Agraffschlauch mit Kreisquerschnitt aus einem schraubengangförmig um eine Achse 2 gewickelten Band 3 mit S-förmiger Profilierung, wobei in der Mitte des Profils ein Steg 4 entsteht, der später im wesentlichen radial zum Schlauch 1 liegt, und wobei die S-Haken 5, 6 benachbarter Bandkanten in hintergreifenden Eingriff gebracht sind.

Die Ausbildung und Herstellung eines Agraffschlauches mit Kreisquerschnitt ist allgemein bekannt, weshalb darauf nicht näher eingegangen werden soll.

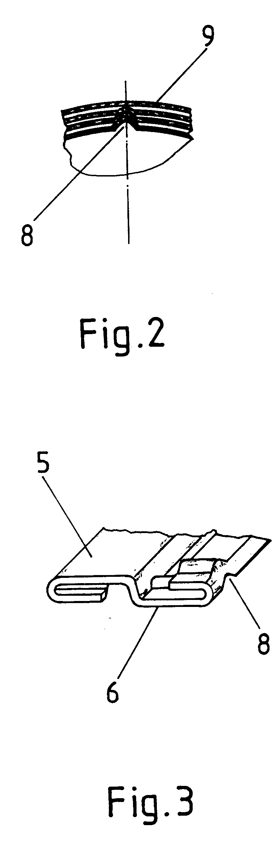

Um nun für einen Agraffschlauch das Aufgehen benachbarter Bandwindungen unter der aus dem Wickelvorgang zurückbleibenden Rückfederungskraft und infolge von handhabungsbedingten Bewegungs- und Vibrationsbeeinflussungen zu verhindern, ist erfindungsgemäß der Agraffschlauch mit - gleichmäßig über den Umfang verteilt - ein bis vier von radial innen nach radial außen gerichteten Einprägungen 8 pro Wickelumfang versehen, die die Falzlagen 7 innerhalb des Falzbereiches von innen nach außen gesehen in abnehmendem Maße verformen so, daß für die äußere Falzlage 9 (siehe Fig. 2) praktisch keine Verformung mehr sichtbar ist. Die Einprägung zehrt dabei die zwischen in Radialrichtung gesehen benachbarten Falzlagen 7 bestehenden Zwischenräume auf. Andererseits bleibt jedoch die Dichtigkeit des Agraffschlauches im Bereich der üblicherweise bei Agraffschläuchen mit Kreisquerschnitt erreichbaren Werte erhalten, da die Einprägung 8 die Profilierung in Umfangsrichtung gesehen nur kurzzeitig unterbricht.

Damit ist der Agraffschlauch gegen torsionale Aufdrehung blockiert, ohne daß er dabei die im übrigen für Agraffschläuche mit Kreisquerschnitt übliche axiale, laterale und torsionale Beweglichkeit verliert. Auch das äußere Aussehen des Schlauches ist unbeeinträchtigt, was zumindest aus ästhetischen Gründen vielfach Bedeutung haben kann.

Fig. 3 zeigt noch einmal ein Stück eines Bandprofils des Schlauches gemäß Fig. 1 in der dort beschriebenen Weise, wobei die Einprägung 8 sich von radial innen bis in die vorletzte Lage der Falzlagen fortsetzt, während die Außenlage der Wicklung (bei 5) keine Beeinträchtigung mehr sichtbar macht.

Wie aus Fig. 1 ersichtlich, sind die Einprägungen 8 als sich achsparallel zum Schlauch erstreckende Sicken ausgebildet, wie sie entstehen, wenn der an sich bekannte, zylindrische Wickeldorn mit einer im wesentlichen zur Achse 2 parallelen Leiste versehen ist, die auf seinem Mantel angeordnet ist.

## Patentansprüche

1. Agraffschlauch (1) mit Kreisquerschnitt für Abgasleitungen von Brennkraftmaschinen, der durch schraubengangförmiges Wickeln aus einem vorprofilierten Metallband (3) und Verfalzen benachbarter Bandkanten unter Ausbildung mehrerer Falzlagen (7) gebildet ist, wobei der Schlauch (1) für jeden Wickelumfang im Bereich der Falzlagen (7) wenigstens eine Einprägung (8) aufweist,
dadurch gekennzeichnet,
daß die Einprägung (8) von radial innen nach radial außen aufgebracht und eingedrückt ist, und daß die Stärke der Einprägung (8) im wesentlichen den Radialbereich zwischen innerer und äußerer Falzlage (9) unter Aufzehrung des Spiels zwischen radial benachbarten Falzlagen (7) überbrückend ausgebildet ist.

2. Agraffschlauch nach Anspruch 1,
dadurch gekennzeichnet,
daß der Schlauch (1) gleichmäßig über seinen Umfang verteilt höchstens vier, vorzugsweise eine Einprägung (8) aufweist.

3. Agraffschlauch nach Anspruch 1 oder 2,
dadurch gekennzeichnet,
daß die Einprägungen (8) als zur Schlauchachse (2) parallele Sicke ausgebildet sind.

## Claims

1. Strip-wound hose (1) with a circular cross-section for the exhaust gas ducts of internal combustion engines, which hose is constructed by helically winding from a pre-profiled metallic strip (3) and the folding of adjacent strip edges under formation of several folds layers (7), wherein for each wound turn the hose (1) has at least one depression (8) in the region of the folded layers (7),
**characterised in that**
the depression (8) is applied from radially inwardly to radially outwardly and impressed, and that the size of the depression (8) is formed essentially to bridge over the radial region between the internal and external folded layers (9), using up the clearance between radially adjacent folded layers (7).

2. Strip-wound hose according to claim 1,
**characterised in that**
distributed equally over its circumference the hose (1) has at most four, preferably one, depression(s) (8).

3. Strip-wound hose according to claim 1 or 2,
**characterised in that**
the depressions (8) are formed as nice parallel to the axis of the hose.

## Revendications

1. Tube à agrafes (1) à section transversale circulaire, pour conduits d'échappement de gaz brûlés des moteurs à combustion interne, qui est formé d'enroulements en forme de spires, obtenus à partir d'une bande métallique (3) profilée au préalable, et par emboîtement des bords de bande voisins sous la formation de plusieurs couches de feuillures (7), le tube (1) présentant pour chaque pourtour d'enroulement, dans la zone des couches de feuillures (7), au moins une empreinte (8), caractérisé en ce que l'empreinte (8) est rapportée et écrasée radialement à partir de l'intérieur vers l'extérieur, et en ce que l'épaisseur de l'empreinte est réalisée par jonction des zones radiales entre les couches de feuillures intérieure et extérieure (9), en supprimant le jeu existant entre des couches de feuillures (7) radiales voisines.

2. Tube à agrafes selon la revendication 1, caractérisé en ce que le tube (1) présente, régulièrement réparties sur sa périphérie, au plus quatre et de préférence une empreinte. (8)

3. Tube à agrafes selon la revendication 1 ou la revendication 2, caractérisé en ce que les empreintes (8) sont réalisées comme des moulures parallèles à l'axe (2) du tube.
